(19) Europäisches Patentamt
European Patent Office
Office européen des brevets

(11) **EP 3 127 782 B1**

(12) **EUROPEAN PATENT SPECIFICATION**

(45) Date of publication and mention
of the grant of the patent:
**02.01.2019 Bulletin 2019/01**

(51) Int Cl.:
**B62D 13/00** (2006.01)    **G05D 1/02** (2006.01)

(21) Application number: **16177510.1**

(22) Date of filing: **01.07.2016**

(54) **STEERING SYSTEM FOR A WHEELED AGRICULTURAL MATERIAL APPLICATOR MACHINE**

LENKSYSTEM FÜR EINE LANDWIRTSCHAFTLICHE MATERIALAPPLIKATORMASCHINE MIT RÄDERN

SYSTÈME DE DIRECTION POUR UNE MACHINE D'APPLICATION DE MATIÈRE AGRICOLE À ROUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.07.2015 GB 201513552**

(43) Date of publication of application:
**08.02.2017 Bulletin 2017/06**

(73) Proprietor: **AGCO International GmbH**
**8212 Neuhausen am Rheinfall (CH)**

(72) Inventors:
• **Copier, Peter**
  **5971NG Grubbenvorst (NL)**
• **Bongaerts, Eric**
  **5971NG Grubbenvorst (NL)**
• **Stols, Hans**
  **5971NG Grubbenvorst (NL)**

(74) Representative: **AGCO Intellectual Property Department**
**AGCO Limited**
**Abbey Park Stoneleigh**
**Kenilworth, Warwickshire CV8 2TQ (GB)**

(56) References cited:
**JP-B2- 2 985 774        US-A1- 2003 167 107**
**US-A1- 2011 112 721**

**Description**

FIELD OF INVENTION

The invention relates to wheeled agricultural applicator machines such as sprayers and fertilizer distributors which are towed or driven across crop fields to apply crop inputs. In particular the invention relates to applicator machines having steerable wheels and to a system and method for controlling the steering of the machine.

BACKGROUND

For many years farmers and contractors have used material applicator machines such as sprayers and fertiliser distributors, hereinafter referred to as 'applicators', to apply pesticides and nutrient-containing materials to crop fields. Such applicators typically comprise a frame, a storage tank or hopper for the material, and means for distributing the material over a working width. Some small capacity applicators are mounted on the rear of a tractor and are thus suspended above the ground. However, larger capacity machines typically comprise a wheeled chassis which is towed by a tractor or self-propelled.

The track width of self-propelled applicator axles are usually matched so as to minimise crop damage when driven through crop fields. Similarly, the track width of trailed applicators is preferably, and often, matched to that of the wheels of the towing tractor in order for the applicator to follow the trodden track (or tramline) of the tractor. For both self-propelled and trailed applicators it can be surmised that the track width of a leading pair of wheels is preferably matched to the track width of a trailing pair of wheels.

It is recognised that the track trodden by a trailing pair of wheels does not naturally correspond to that of a leading pair of wheels around curved paths. Instead the trailing wheels tend to 'cut the corner', a problem that becomes more pronounced with larger separation between the axles. As a result, crop damage by the wheels of a trailing axle during headland turns is a significant, yet known, problem.

It is known to provide the wheels of trailed applicator machines and the rear wheels of self-propelled sprayers with steering functionality which is controlled in response to a sensed angular change between the leading and trailing wheels in the such a manner so that the trailing wheels follow the wheel track of the leading wheels in at least an approximate manner. For trailed applicators it is known to measure, with an appropriate sensor, the angle between the tractor and the trailed applicator and steer the applicator wheels accordingly. Therefore, when an angle between the tractor and the applicator is detected during a headland turn then the applicator wheels are steered in the opposite direction so as to match the turning radii of the wheels of either the front or rear tractor axles.

For example, EP-2,679,470 discloses a steering control system for a trailed implement which is towed by an agricultural tractor. The steering of the implement is controlled in response to the steering lock angle of the tractor which is sensed and communicated via a data bus.

Despite the improvement, the steerable trailing applicator wheels of known systems still tread down standing crop material at the commencement of a headland turn resulting in lost crop.

US-2003/0167107, on which the preambles of claims 1 and 5 are based, discloses a steering control system for a trailed implement which is towed by a tractor, wherein an angle between the implement and tractor is stored at regular time intervals to provide a stored history thereof. A lag datum, dependent upon the forward travel speed, is calculated and represents a time taken for the coupled assembly to cover a distance equivalent to the distance separating the trailer axle and the rear tractor axle. The steering angle of the trailer is calculated based upon the current angle and the lag datum.

SUMMARY OF INVENTION

It is an object of the invention to provide an improved steering control system and method for a wheeled agricultural applicator machine.

It is a further object of the invention to provide a steering control system and method for a wheeled agricultural applicator machine that reduces the area of the wheel track of a following axle that extends outside of the wheel track of a leading axle.

In accordance with a first aspect of the invention there is provided method of steering a wheeled agricultural material application machine having a pair of leading wheels which tread a first track and a pair of trailing wheels which tread a second track, the method comprising the steps of:

-   logging a history of the first track which involves storing a log of a calculated travel distance and a heading of the leading wheels;
-   generating a steering signal for the trailing wheels based upon the logged history and a spatial offset between the leading and trailing wheels; and,

- controlling the steering of the trailing wheels based upon the generated steering signal.

In accordance with a second aspect of the invention there is provided a steering control system for a wheeled agricultural material application machine, the system comprising a pair of leading wheels which tread a first track, a pair of trailing wheels which tread a second track, steering means configured to steer the trailing wheels, and control means configured to generate a steering signal for controlling the steering means, wherein the control means is also configured to log a history of the first track which involves storing a log of the heading of the leading wheels and to generate the steering signal based upon the logged history and a spatial offset parameter which is representative of a separation distance between the pairs of leading and trailing wheels, characterised in that the control means is configured to store a log of a calculated travel distance.

The invention provides a steering control system that takes into account the distance between the leading wheels and the trailing wheels of a wheeled applicator machine, wherein steering of the latter is not directly linked to the sensed angle between the leading and trailing wheels. Instead, a spatial 'delay' or offset is introduced into a steering control algorithm for the steering of the trailing wheels.

The invention involves the observation that the trailed steerable wheels of known applicators are controlled in a manner which results in the trailed wheels straying from the trodden track of the leading wheels at the commencement of a headland turn. Such known control systems adjust the steering of the trailing wheels in direct response to a sensed angular change (between the leading and trailing axles/wheels). As soon as a change in angle is detected at the start of a headland turn then the trailed wheels are immediately steered away from the normally straight track of the leading wheels. The trailed wheels tread an arc-shaped area of ground which resides outside of the track trodden by the leading wheels.

Such known control systems fail to take account of the distance or separation between the leading wheels and the trailing wheels, whether that be in trailed or self-propelled applicators and this deficiency is addressed by the present invention. A steering control system of the invention, therefore, steers the trailed wheels so that the track of the trailing wheels does not prematurely stray from the track of the leading wheels at the commencement of a headland turn, or at any time the applicator is steered away from a straight path. Advantageously, less crop material is damaged at the commencement of headland turns.

The spatial offset parameter included in the calculation carried out by the control means is representative of the distance or separation between the leading wheels and the trailing wheels and may be entered by an operator and/or stored in a memory device.

The system may further comprise means to detect an angular change between a heading of the leading wheels and a heading of the trailing wheels.

In a trailed applicator towed by a tractor, the means to detect an angular change may be an angle-sensing device coupled to a towing hitch at a pivot joint between the tractor and applicator. Such a device may be mechanical and may involve a triangulating tie between the frame of the applicator and the tractor, the tie operating an angular sensor to detect any change in tractor-applicator angle. Alternatively, an optical sensor or camera-based system may be employed to sense a change in angle between the applicator and tractor.

In a self-propelled applicator, a front steering angle sensor may be provided to indicate to the controlled that the angle between the leading (front) wheels and trailing (rear) wheels has changed.

Alternatively further still, an angular change, or impending angular change, between the respective headings of the leading and trailing wheels may be determined from a stored map which includes a planned path for the applicator together with position sensing means such as a GNSS receiver.

The calculation or algorithm carried out by the controller to determine the steering control signals may be based upon the angular change detected. In one embodiment of the invention, steering of the trailed wheels is adjusted in response to a detected angular change but with consideration of the spatial offset between the leading and trailing wheels. For example, adjustment of the steering of the trailed wheels may be delayed by a determined time interval based upon a stored wheel separation and a sensed vehicle ground speed.

The controller stores a log of a calculated travel distance and a heading of the leading wheels. The heading of the leading wheels may be sensed as described above using, for example, a device to measure the angle between the towing hitch of a trailed applicator and the towing tractor, the heading being periodically recorded in, for example an array. The travel distance may be determined from a value representative of the applicator ground speed which is sensed and received by the controller.

It should be understood that the determined heading may be measured with a local frame of reference, and not necessarily measured with reference to a geographic coordinate system. For example, the heading may be measured with reference to the detected commencement of a turn or deviation from a straight path.

The heading and distance data may be logged in a time-indexed array. In a preferred embodiment a current index corresponds to a most-recent log, and a relative index is determined by applying the spatial offset to the current index, wherein the log corresponding to the relative index is used in calculating the steering signal. The stored separation value between the leading and trailing wheels is, therefore, used in conjunction with the array to read a desired heading for the trailing wheels based upon the logged history of the leading wheel heading.

BRIEF DESCRIPTION OF DRAWINGS

Further advantages of the invention will become apparent from reading the following description of specific embodiments with reference to the appended drawings in which:-

Figure 1 is a schematic plan representation of a tractor and trailed sprayer suitable for embodying a system or method in accordance with the invention;

Figure 2 is a schematic plan view of a crop field showing a simplified path taken by the tractor and sprayer of Figure 1;

Figure 3 is a schematic representation of a steering control system in accordance with a first embodiment of the invention;

Figures 4 to 8 show, in plan view, respective enlarged portions of the path of Figure 2 at various positions during a headland turn, the sprayer embodying the steering control system of Figure 3;

Figure 9 is a flow chart illustrating an example method executed by the steering control system of Figure 3;

Figure 10 is a flow chart illustrating an example centre control mode executed by the steering control system of Figure 3;

Figure 11 is a flow chart which outlines an example heading control process executed by the steering control system of Figure 3;

Figure 12 illustrates the parameters sensed and stored by the steering control system of Figure 3 and the parameters calculated therefrom;

Figures 13a and 13b summarise an example method flow of logging heading data carried out by a steering control system in accordance with the invention;

Figure 14 shows, in plan view, a self-propelled sprayer commencing a headland turn, the sprayer embodying a steering control system in accordance with a second embodiment of the invention;

Figure 15 is a flow chart which sets out a process of generating a steering signal from a log of GNSS data representing the path of a leading pair of wheels; and,

Figure 16 is a flow chart which sets out a process for controlling the steering of a pair of trailing wheels based upon the steering signals generated by the process illustrated in Figure 15.

DETAILED DESCRIPTION OF SPECIFIC EMBODIMENTS

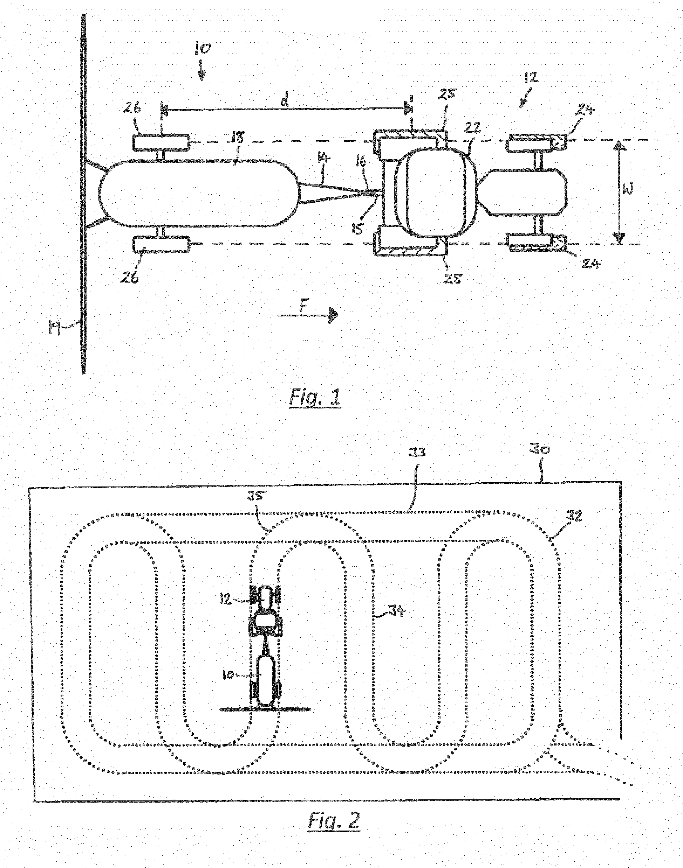

With reference to Figure 1, a trailed agricultural sprayer 10 is shown hitched to a tractor 12. The sprayer 10 comprises a frame which includes a tongue 14 connected to a tractor drawbar 15 by a pin 16 which provides a connection that can pivot about the vertical axis of the pin. The frame of the sprayer 10 supports a fluid storage tank 18 and a foldable spray boom 19 the width of which defines a working width.

Although a sprayer is illustrated it should be appreciated that other trailed applicator machines could instead be provided. For example, the invention could be embodied in a trailed fertilizer distributor or a simple trailer with an application device mounted atop thereof.

The tractor 12 is of the agricultural type and includes a drivers cab 22, a pair of steerable front wheels 24 and a pair of rear wheels 25 which are typically not steerable and are permanently aligned with the longitudinal axis of the tractor.

The sprayer 10 comprises a single axle having a pair of steerable wheels 26 mounted for rotation thereon. Not shown in Figure 1, the sprayer wheels 26 have an associated steering control apparatus which includes at least one hydraulic steering cylinder which is coupled to a controlled hydraulic supply on the tractor 12. In an alternative arrangement, the sprayer may be provided with a further axle and pair of wheels which may, or may not, be steerable.

Figure 2 illustrates a crop field 30 and a path 32 taken by the tractor 12 to carry out an application of pesticide to the crop. The tractor 12 tows the sprayer 10 along the path 32 in a forward direction F. In order to minimise crop damage it is well known to drive an applicator machine over the same path for each material application.

Typically a headland pass 33 is first carried out around the perimeter of the field 30. Following this, the tractor 12 is driven across the field in a repeating pattern of cross-field passes 34. At the end of each cross-field pass 34 the tractor is turned on the headland pass 33 in a curved path 35. Although shown as 180 degree turns in Figure 2, this is dependent upon the sprayer width and may involve a first 90 degree turn followed by a straight path on the headland pass 33 and then a second 90 degree turn.

The tractor front wheels 24, rear wheels 25 and sprayer wheels 26 are arranged so as to have substantially the same track width w. Therefore, when travelling across the crop field 30 in a straight line only a single track or tramline is trodden, wherein the sprayer wheels 26 follow the track of the tractor wheels 24,25. However, when travelling around a curve, the rear tractor wheels 25 turn with a smaller turning radii than the front wheels 24. Similarly, without correction, sprayer wheels would 'cut the corner' and turn with an even smaller turning radii. As is known, this effect is undesirable as the footprint per distance travelled of the tractor-sprayer combination is greater when turning thus leading to increased crop damage.

The sprayer wheels 26 are steered during a headland turn, or other curved path, so as to track or follow the trodden track of either the front or rear tractor wheels 24,25. In accordance with the invention, control of the steering takes account of the distance 'd' between the tractor rear wheels 25 and the sprayer wheels 26.

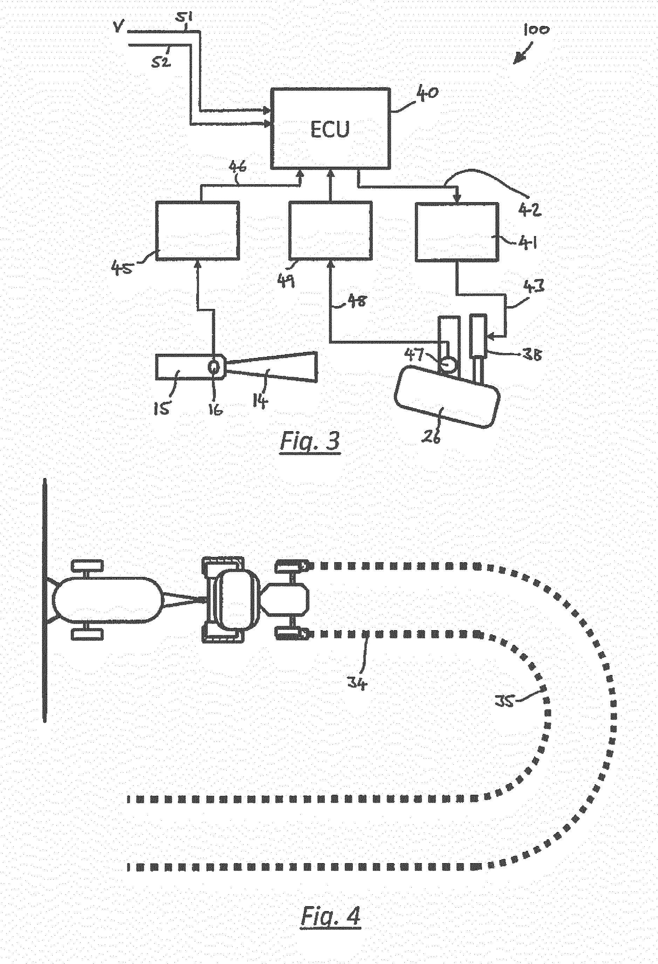

Figure 3 shows in schematic form the hardware of a steering control system 100 in accordance with a first embodiment. One steerable wheel 26 has coupled thereto a steering mechanism which includes a hydraulic cylinder 38. An electronic control unit (ECU) 40 generates steering control signals in accordance with the invention, the signals being communicated to a hydraulic control unit 41 by a wired or wireless link 42. The hydraulic control unit 41 converts the electrical signals into hydraulic signals which are used to control steering cylinder 38 via line 43.

The ECU 40 receives an input from a tractor-trailer angle sensing device 45 which is located at the connection between the drawbar 15 and frame tongue 14. Such devices are known and will not be described any further. In short, the angle sensing device 45 serves to generate a signal that is representative of the angular deviation of the sprayer 10 from the longitudinal axis of the tractor 12. This signal is communicated to ECU via line 46.

A steering angle sensor 47 is mounted proximate to one sprayer wheel 26 or the steering linkage associated therewith, the sensor 47 serving to measure the current steering angle of that wheel and generate a signal that is representative thereof. The generated steering angle signal is communicated to ECU via line 48 and a local control unit 49.

ECU 40 also receives a groundspeed signal 'v' from the tractor 12 via line 51. Signals that are representative of operator commands are transmitted from the tractor 10 to the ECU 40 via line 52.

In a preferred arrangement, ECU comprises a microprocessor which is located on the sprayer 10 wherein a communications link to the tractor is provided, for example an Isobus link. Alternatively, the sprayer 10 may comprise a groundspeed sensor for generating signal 'v' locally. In a further alternative arrangement, the ECU 40 may be located on the tractor 10 and may be integral with a larger ECU which is associated with other tractor functions.

Operation

*Summary*

The ECU 40 stores and executes at least one control algorithm which calculates steering control signals from the abovementioned inputs. In this embodiment the ECU 40 operates six different control modes:

- Automatic trail (or track) following mode;
- Automatic centre control mode;
- Manual centre control mode;
- Manual clockwise steering control mode;
- Manual anti-clockwise steering control mode;
- Inactive.

In the automatic trail following mode an automatic trial following algorithm is enabled.

In the automatic centre control mode the sprayer wheels 26 are centred in a straight position as a result of the disabling of the automatic trail following mode by the ECU 40 or by the operator. The system 100 becomes inactive when the wheels are in a centre position.

The manual centre control mode can be activated by the operator by holding a button in the tractor cab 22. When operated the wheels 26 are centred in a straight position.

In the manual clockwise steering control mode the wheels 26 are moved clockwise by the user by holding a button. In the manual anti-clockwise steering control mode the wheels 26 are moved anti-clockwise by the user by holding a button.

The ECU 40 allows only one control mode to be active at any time. When another control mode is activated automatically or by the user the previous control mode is disabled. The manual control modes require the user to press and hold the appropriate control button (not shown). Releasing this button will de-activate the control mode and the system becomes inactive.

The Automatic Trail Following Mode operates in four different mutually exclusive control states:

• Zero

• Turn-in

• Turn

• Turn-out

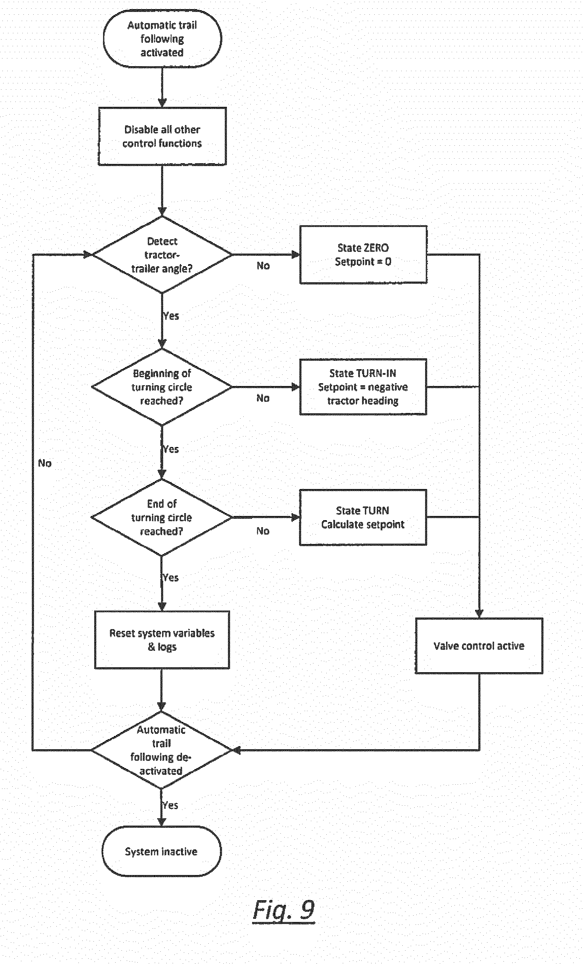

The process flow for setting the control states in the automatic trail following mode is illustrated in Figure 9 and is described below in relation to the described tractor 12 and sprayer 10 executing a headland turn with reference to Figures 4 to 8.

As shown in Figure 4, the angle between the tractor 12 and sprayer 10 whilst travelling along a cross-field pass 34 is zero, that is travel in a substantially straight line. This angle is detected by sensor 45 and communicated to ECU 40 which sets the control state 'zero'. In this mode the steering valves associated with cylinder 38 are inactive, whilst the trailer wheels are kept in a fixed position.

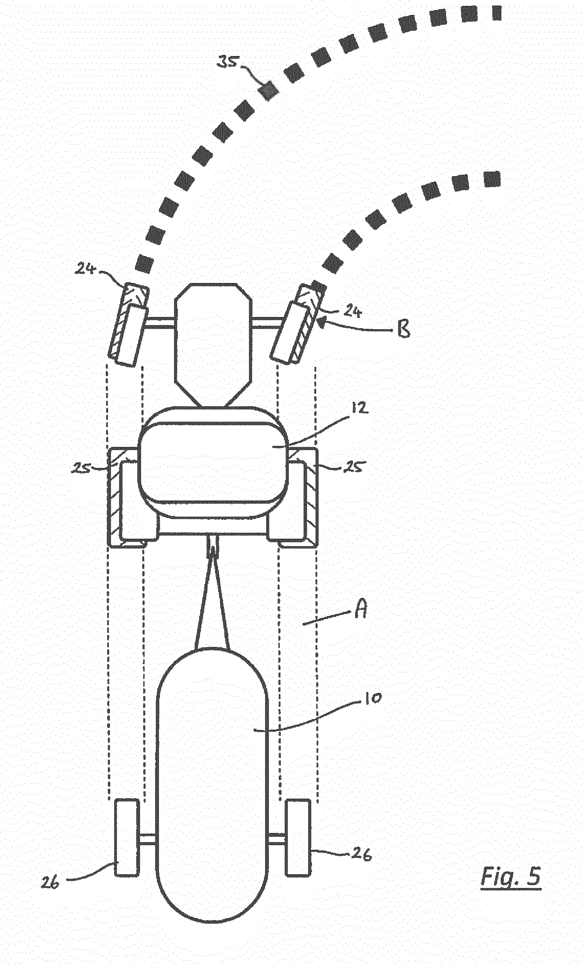

When the sensor 45 detects a change in angle (away from zero) between the tractor 12 and sprayer 10 this is interpreted as the beginning of a turn and this event is represented in Figure 5 as the tractor front wheels 24 start to turn on the curved headland path 35. At this point the control state 'Turn-in' is set and a heading control process is commenced by the ECU to calculate and generate steering control signals for the sprayer wheels 26. The heading control process will be described in more detail below. In summary however, the heading control process is configured to maintain the heading of the trailer wheels 26 on the straight track A trodden by the tractor wheels 24, 25. To achieve this the sprayer wheels 26 are steered to the opposite direction as the tractor front wheels 24.

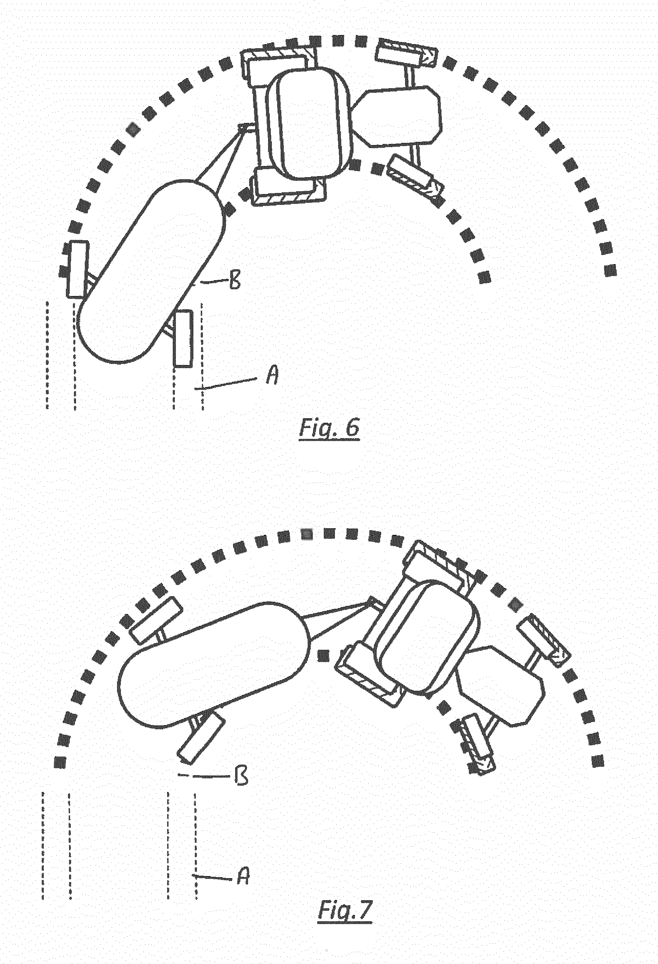

When the heading control process determines that the sprayer wheels 26 have reached the point B where the tractor entered the turn (Figure 6), then the control state 'Turn' is set. In this control state the heading control functionality keeps the sprayer wheels 26 on the trodden track of the tractor rear wheels 25 as the tractor-sprayer combination carries out the turn (Figure 7). Alternatively, the sprayer wheels 26 may be steered so as to follow the trodden track of the front wheels 24.

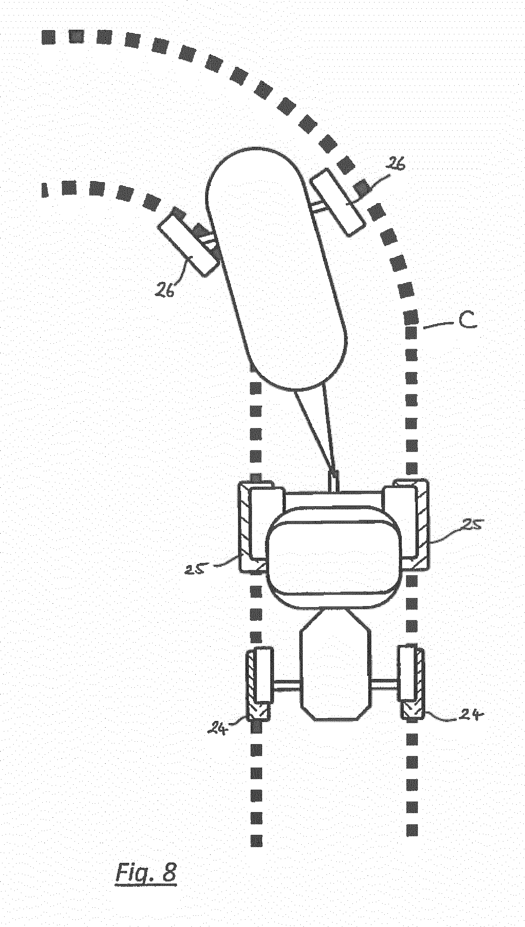

When the heading control process determines that the front wheels 24 of the tractor 12 have reached the end of the headland turn C (Figure 8) then the control state 'Turn-out' is set. In this state the sprayer wheels 26 are steered to follow the trodden track of the rear wheels 25. When the sprayer wheels 26 reach the straight cross-field path 34, or when the tractor-sprayer angle is sensed as zero, then the heading control process is terminated.

*Centre Control Modes*

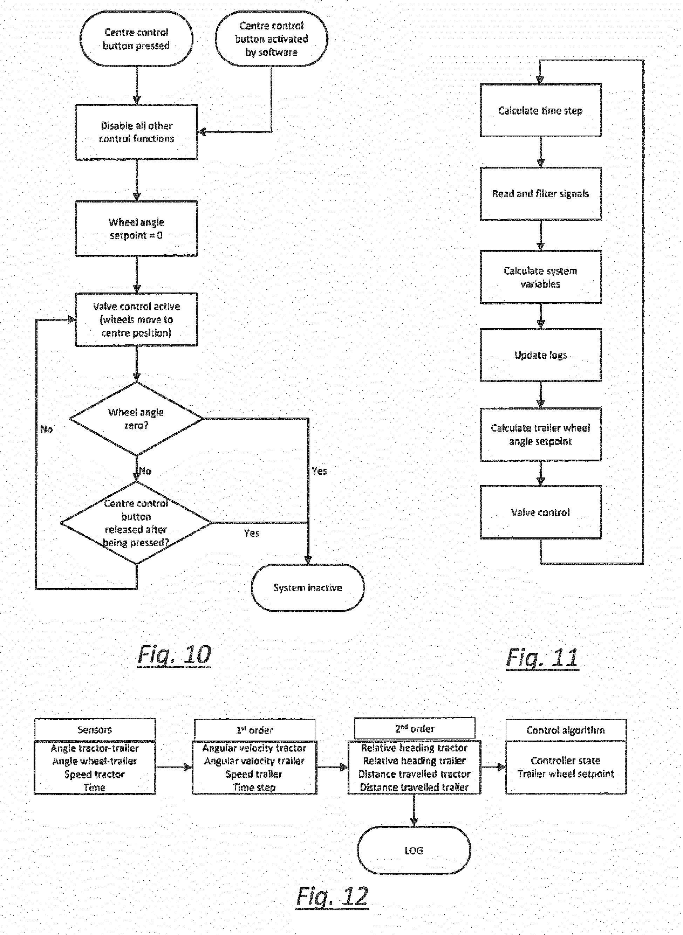

The centre control modes (Figure 10) centres the sprayer wheels 26 for driving in a straight line. This function can be activated by the user by holding a button or activated automatically by the ECU 40.

The ECU 40 will call the auto-centre functionality when the sprayer wheels aren't centred in the following cases:

• the tractor 12 speed becomes greater than a minimum value; or,
• the tractor 12 reverses.

The auto-centre functionality will only be called once and de-activated when the sprayer wheels are centred until the wheels are out of centre position again by activating one of the other control modes.

*Manual Steering Control Mode*

A manual mode is provided to allow an operator to change the sprayer wheel position clockwise/anti-clockwise manually by holding one of the manual control buttons. This function is only made available when the tractor speed is sensed as being lower than a maximum predetermined value. The steering of the sprayer wheels 26 will stop when the operator releases the manual control button or the maximum possible steering angle is reached.

*Heading Control Process*

As mentioned above, the ECU 40 executes a heading control process to calculate steering control signals which are communicated to the hydraulic control unit 41 and ultimately the steering cylinder 38. The heading control process is outlined in Figure 11.

When the automatic trail following mode is enabled and the 'Turn-in' control state becomes active, the ECU 40 uses a stored heading control algorithm to calculate a sprayer wheel angle setpoint and control the steering of the sprayer accordingly. The tractor-sprayer angle, the sprayer wheel angle and the tractor groundspeed are measured and logged. The sensed parameters are used to calculate the path that the tractor has driven. The history of the logged tractor path is used, together with knowledge of the spatial offset 'd' between the tractor rear wheels 25 and the sprayer wheels 26, to calculate the set point of the sprayer wheel angle to follow the track trodden by the tractor rear wheels 25.

With reference to the process flow of Figure 11, the ECU 40 calculates a time step which may, or may not, be a fixed interval. The aforementioned sensor signals are received and preferably filtered. System variables are then calculated by the ECU 40, the variables and calculations to be detailed below. A log is then updated with the calculated variables against the time interval. A steering angle signal is then calculated and communicated to control the valves associated with steering cylinder 38.

To calculate the setpoint for the sprayer wheel angle the history of the trail the tractor has driven is first determined by ECU 40. To do this the tractor heading for each point on this trail is calculated and logged. This tractor heading is relative because there is no relation to a coordinate system of the ground, only the starting point B of the corner. The system variables needed are calculated by a set of first and second order derivatives as outlined in Figure 12.

The angular velocity of the tractor 12 is calculated as follows:

$$\dot{\theta}_1 = \frac{\dot{\psi} + \frac{1}{L}[v_1 \sin(\psi) - v_2 \sin \phi_2]}{\frac{1}{L}\cos(\psi)D + 1}$$

$$\dot{\psi} = \frac{\psi[n+1] - \psi[n]}{T_S}$$

wherein,

$\psi$ = tractor-sprayer angle [rad]
$v_1$ = tractor speed [ms$^{-1}$]
$v_2$ = sprayer speed [ms$^{-1}$]
$L$ = sprayer length [m]
$D$ = hook distance [m]
$T_S$ = time step [s]
$\overline{\dot{\theta}_1}$ = tractor angular velocity [rads$^{-1}$]
$\overline{\dot{\theta}_2}$ = sprayer angular velocity [rads$^{-1}$]

The angular velocity of the sprayer 10 is calculated as follows:

$$\dot{\theta}_2 = \frac{1}{L}[v_1 \sin(\psi) - \cos(\psi)\dot{\theta}_1 D - v_2 \sin \phi_2]$$

The groundspeed of the sprayer is calculated as follows:

$$v_2 = \frac{v_1 \cos(\psi) + \sin(\psi)\, \dot{\theta}_1 D}{\cos \phi_2}$$

The relative heading of the tractor is calculated as follows:

$$\theta_1[n+1] = \theta_1[n] + \dot{\theta}_1 T_S$$
$$\theta_1[0] = 0$$

The relative heading of the sprayer is calculated as follows:

$$\theta_2[n+1] = \theta_2[n] + \dot{\theta}_2 T_S$$
$$\theta_2[0] = 0$$

wherein,

$\theta_1$ = tractor heading [rad]
$\theta_2$ = sprayer heading [rad]
$T_s$ = time step [s]
$x_1$ = distance travelled tractor [m]
$x_2$ = distance travelled sprayer [m]

The distance travelled by the tractor is calculated as follows:

$$x_1[n+1] = x_1[n] + v_1 \cdot T_S$$
$$x_1[0] = 0$$

The distance travelled by the sprayer is calculated as follows:

$$x_2[n+1] = x_2[n] + v_2 \cdot T_S$$
$$x_2[0] = -L$$

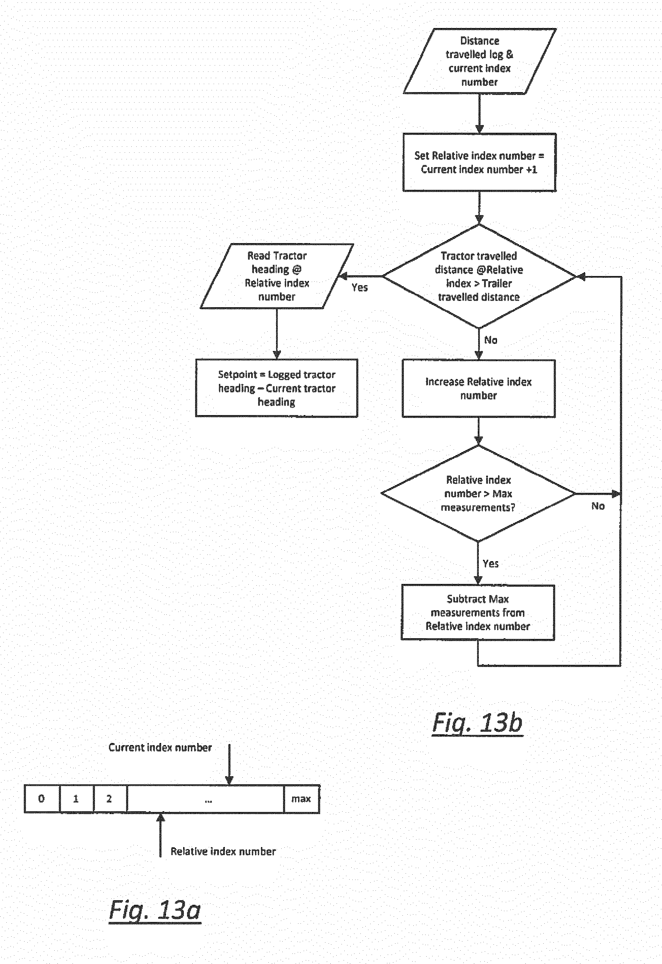

Arrays (Figure 13a) are used in the microprocessor to store the tractor heading and the distance the tractor has travelled. With each detected change in heading the index number, used to determine the place in the arrays to store the data, is increased by one. When the maximum array size is reached the index number is reset to zero. The index number used to store the current tractor heading and distance travelled is identifies as the current index number. The derived index number used to determine the needed sprayer heading is identified as the relative index number.
To determine the relative index number the ECU 40 searches the array with the stored tractor travelled distance to the first point were the distance travelled is greater than the current sprayer travelled distance. Notice that due to the way the tractor travelled distance array is filled that the value at the current index is the largest and the value at the current index +1 is the smallest. The tractor heading stored at the relative index number found this way is the heading the tractor had at the point the sprayer is at a given current moment. The difference between the current tractor heading and the stored heading is used as the setpoint for the sprayer wheel angle.
The process employed to populate the arrays and calculate the steering control setpoint value is set out in Figure 13b.
By taking account of the distance 'd' between the rear wheels 25 of the tractor and the sprayer wheels 26 in the calculation, the sprayer wheels more closely follow the trodden track of the tractor wheels and do not prematurely stray therefrom at the commencement of a headland turn.
In an example, the distance between the rear tractor wheel 25 and the sprayer wheel 26 is 5m. The arrays used to log the tractor distance travelled and heading have 10 elements. Logging of the tractor distance started at 0m, but the first elements are already overwritten.

| Tractor | | |
|---|---|---|
| Distance travelled | Heading | |
| 10 | 105 | |
| 11 | 120 | |
| 12 | 140 | ← Current index |
| 3 | 20 | |
| 4 | 35 | |
| 5 | 50 | |
| 6 | 65 | |
| 7 | 80 | ← Relative index |
| 8 | 90 | |
| 9 | 110 | |

The tractor in the example has travelled 12m from the start of the turn, and this is logged at the current index.

The sprayer has travelled:

$$12 - 5 = 7m.$$

From the current index the algorithm searches for the first tractor travelled value that is equal or greater than the distance the sprayer has travelled. This is the relative index. The tractor heading at this point is used to calculate the sprayer heading.

*Alternative Embodiments*

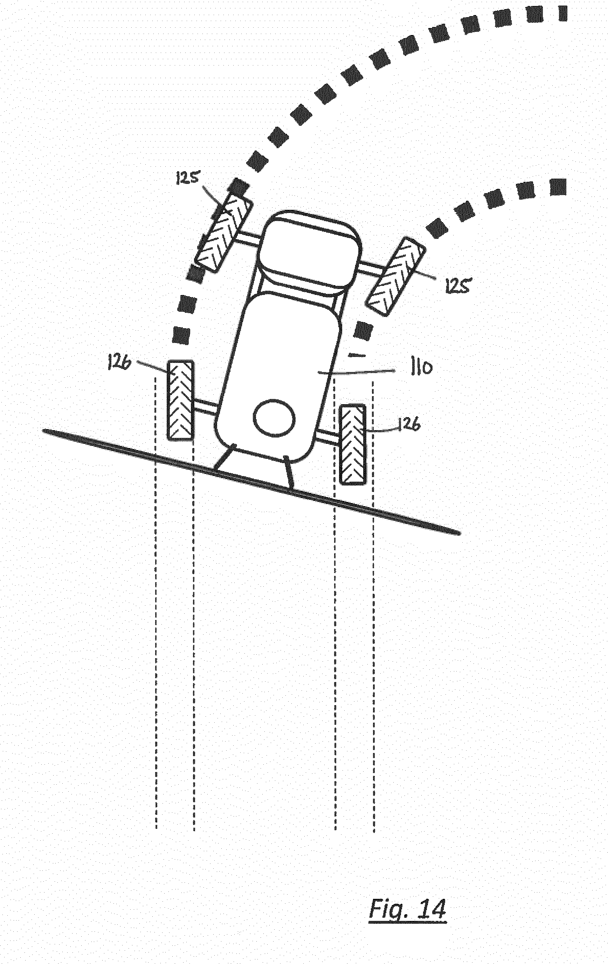

Although described in relation to a trailed, or pull-type, sprayer, the invention can be employed on a self-propelled sprayer. Such a sprayer 110 is indicated in Figure 14 and includes the leading and trailing wheels 125, 126 supported on a common frame 111. As will be appreciated, a self-propelled sprayer does not require a drawbar angle sensor but instead the system can determine the relative heading of the front wheels through the use of front steering angle sensors for example.

In an alternative example, GNSS data is utilised instead of sensing the angle between the leading wheels and the trailing wheels. Modern agricultural tractors are often fitted with GNSS receivers and data from these can be used to represent the position of the leading wheels so that the track of the leading wheels can be logged.

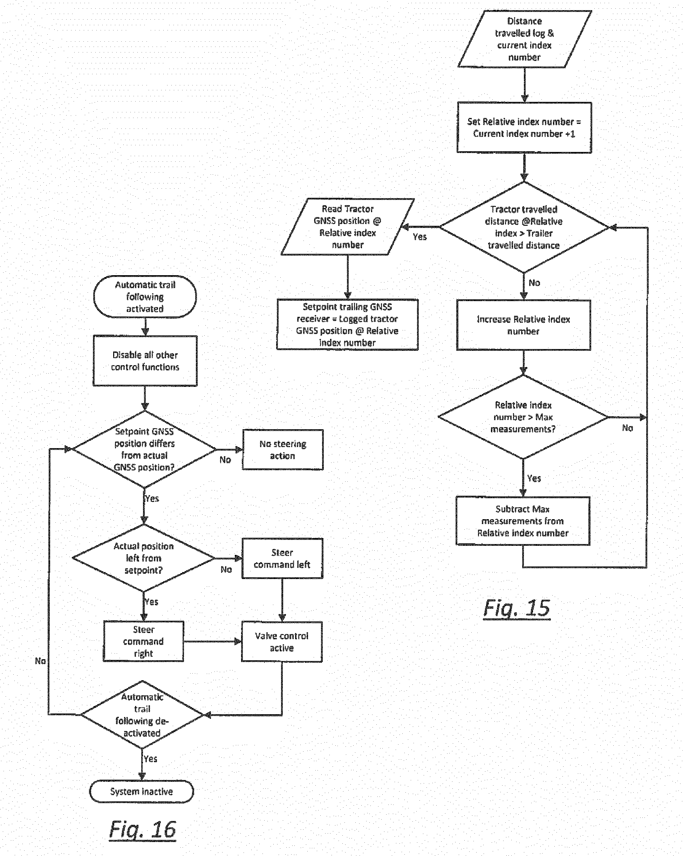

The geo-coordinates of the path trodden by the leading wheels (whether that be a pair of tractor wheels or the front wheels of a self-propelled sprayer) are logged with a time interval stamp and/or a distance interval stamp. Together with the known spatial offset between the leading and trailing wheelsets, and using the same methodology of indexing as described above, the coordinates are used to generate position setpoints for the trailing wheels as illustrated in Figure 15.

A second GNSS receiver is optionally fixed or mounted with respect to the trailing wheels and is configured to sample and generate a position signal that represents a lateral position of the trailing wheels. For example, the second GNSS receiver may be mounted on top of a trailed sprayer or directly above the rear axle of a self-propelled sprayer.

A control loop, illustrated in Figure 16 is used to repeatedly compare the calculated setpoints with the actual GNSS position for the trailing wheels. If a difference is present then the rear wheels are steered to the left or to the right as required. This process is illustrated in Figure 16.

In summary a steering control system and method for a wheeled agricultural material applicator machine is provided. Suitable for both trailed applicators and self-propelled applicators, the system comprises a pair of leading wheels which tread a first track, and a pair of trailing wheels which tread a second track. Steering means are configured to steer the trailing wheels so as to follow the first track. Control means are configured to log a history of the first track and then calculate a steering signal for controlling the steering means. The calculation takes account of the logged history and of the spatial separation between the pairs of leading and trailing wheels so that the latter are not steered away from the first track prematurely at the commencement of a headland turn for example.

It should be emphasized that the above-described embodiments of the present disclosure are merely possible examples of implementations, merely set forth for a clear understanding of the principles of the disclosure. Many variations and modifications may be made to the above-described embodiment(s) of the disclosure without departing substantially from the principles of the disclosure as defined by the appended claims.

**Claims**

1. A method of steering a wheeled agricultural material application machine (10;110) having a pair of leading wheels (25;125) which tread a first track and a pair of trailing wheels (26;126) which tread a second track, the method comprising the steps of:

   - logging a history of the first track which involves storing a log of the heading of the leading wheels (25; 125);
   - generating a steering signal for the trailing wheels (26;126) based upon the logged history and a spatial offset (d) between the leading and trailing wheels; and,
   - controlling the steering of the trailing wheels based upon the generated steering signal, **characterised in that** the step of logging the history also involves storing a log of a calculated travel distance.

2. A method according to Claim 2, further comprising detecting an angular change between the heading of the leading wheels and a heading of the trailing wheels, and sensing a groundspeed, wherein the steering signal is also based upon the angular change and the sensed groundspeed.

3. A method according to Claims 1 or 2, wherein the log is stored in an indexed array of sequential events, the method further comprising the step of:

   - determining a current index corresponding to a most-recent log;
   - determining a relative index by applying the spatial offset to the current index, wherein the log corresponding to the relative index is used in calculating the steering signal.

4. A method according to any one of Claims 1 to 3, further comprising generating a steering set point from the logged history, and generating the steering signal from the steering set point.

5. A steering control system (100) for a wheeled agricultural material application machine (10;110), the system comprising a pair of leading wheels (25;125) which tread a first track, a pair of trailing wheels (26;126) which tread a second track, steering means configured to steer the trailing wheels, and control means (40) configured to generate a steering signal for controlling the steering means (38), wherein the control means (40) is also configured to log a history of the first track which involves storing a log of the heading of the leading wheels (25;125) and to generate the steering signal based upon the logged history and a spatial offset parameter which is representative of a separation distance (d) between the pairs of leading and trailing wheels, **characterised in that** the control means is configured to store a log of a calculated travel distance.

6. A system according to Claim 5, further comprising means to detect an angular change between a heading of the leading wheels and a heading of the trailing wheels, wherein the generated steering signal is based upon the angular change.

7. An agricultural tractor (12) and trailed applicator machine (10) combination comprising a steering control system according to Claim 5 or 6, wherein the agricultural tractor includes the leading wheels (25), and the trailed applicator machine (10) is coupled to the tractor (12) by a towing hitch (15) and comprises the trailing wheels (26).

8. A combination according to Claim 7, further comprising an angular sensing device (45) configured to measure angular displacement of a pivoting coupling between the tractor (12) and the applicator machine (10) at the towing hitch (15), wherein the calculation is based upon the measured angular displacement.

9. A self-propelled applicator machine (110) comprising a steering control system according to Claim 5 or 6, the machine (110) including the leading and trailing wheels (125,126) supported on a common frame.

**Patentansprüche**

1. Verfahren zum Lenken einer mit Rädern versehenen landwirtschaftlichen Materialausbringungsmaschine (10; 110) mit einem Paar von Führungsrädern (25; 125), die eine erste Spur erzeugen, und einem Paar von Folgerädern (26; 126), die eine zweite Spur erzeugen, wobei das Verfahren die folgenden Schritte aufweist:

   - Protokollieren einer Historie der ersten Spur einschließlich eines Speicherns eines Protokolls des Kurses der Führungsräder (25; 125);
   - Erzeugen eines Lenksignals für die Folgeräder (26; 126) basierend auf der protokollierten Historie und einem räumlichen Abstand (d) zwischen den Führungs- und den Folgerädern; und
   - Steuern/Regeln des Lenkens der Folgeräder basierend auf dem erzeugten Lenksignal, **dadurch gekennzeichnet, dass** der Schritt des Protokollierens der Historie auch ein Speichern eines Protokolls einer berechneten Reisedistanz aufweist.

2. Verfahren nach Anspruch 2, weiterhin mit einem Detektieren einer Winkeländerung zwischen dem Kurs der Führungsräder und einem Kurs der Folgeräder und einem Erfassen einer Bodengeschwindigkeit, wobei das Lenksignal auch auf der Winkeländerung und der erfassten Bodengeschwindigkeit basiert.

3. Verfahren nach Anspruch 1 oder 2, wobei das Protokoll in einem indizierten Array von aufeinanderfolgenden Ereignissen gespeichert wird, weiterhin mit den folgenden Schritten:

   - Bestimmen eines dem neuesten Protokoll zugeordneten aktuellen Index;
   - Bestimmen eines relativen Index durch Anwenden des räumlichen Abstands auf den aktuellen Index, wobei das dem relativen Index zugeordnete Protokoll beim Berechnen des Lenksignals benutzt wird.

4. Verfahren nach einem der Ansprüche 1 bis 3, weiterhin mit einem Erzeugen eines Lenk-Sollwerts aus der protokollierten Historie und einem Erzeugen des Lenksignals aus dem Lenk-Sollwert.

5. Lenk-Steuer/Regelsystem (100) für eine mit Rädern versehene landwirtschaftliche Materialausbringungsmaschine (10; 110), wobei das System ein Paar von Führungsrädern (25; 125), die eine erste Spur erzeugen, ein Paar von Folgerädern (26; 126), die eine zweite Spur erzeugen, ein Lenkmittel, das dazu eingerichtet ist, die Folgeräder zu lenken, und ein Steuer/Regelmittel (40) aufweist, das dazu eingerichtet ist, ein Lenksignal zum Steuern/Regeln des Lenkmittels (38) zu erzeugen, wobei das Steuer/Regelmittel (40) auch dazu eingerichtet ist, eine Historie der ersten Spur zu protokollieren, was ein Speichern eines Protokolls des Kurses der Führungsräder (25; 125) und ein Erzeugen des Lenksignals basierend auf der protokollierten Historie und einem für einen Abstand (d) zwischen den Paaren von Führungs- und Folgerädern repräsentativen räumlichen Abstandsparameter beinhaltet, **dadurch gekennzeichnet, dass** das Steuer/Regelmittel dazu eingerichtet ist, ein Protokoll einer berechneten Reisedistanz zu speichern.

6. System nach Anspruch 5, weiterhin mit einem Mittel zum Detektieren einer Winkeländerung zwischen einem Kurs der Führungsräder und einem Kurs der Folgeräder, wobei das erzeugte Lenksignal auf der Winkeländerung basiert.

7. Kombination aus einem landwirtschaftlichen Traktor (12) und einer gezogenen Ausbringungsmaschine (10) mit einem Steuer/Regelsystem nach Anspruch 5 oder 6, wobei der landwirtschaftliche Traktor die Führungsräder (25) aufweist und die gezogene Ausbringungsmaschine (10) mittels einer Anhängerkupplung (15) an den Traktor (12) gekoppelt ist und die Folgeräder (26) aufweist.

8. Kombination nach Anspruch 7, weiterhin mit einer Winkelerfassungseinrichtung (45), die dazu eingerichtet ist, einen Winkelversatz einer Schwenkkupplung zwischen dem Traktor (12) und der Ausbringungsmaschine (10) an der Anhängerkupplung (15) zu messen, wobei die Berechnung auf dem gemessenen Winkelversatz basiert.

9. Selbstangetriebene Ausbringungsmaschine (110) mit einem Steuer/Regelsystem nach Anspruch 5 oder 6, wobei die Maschine (110) die an einem gemeinsamen Rahmen gelagerten Führungsräder und Folgeräder (125, 126) aufweist.

**Revendications**

1. Procédé de direction d'une machine d'application de matière agricole à roues (10 ; 110) ayant une paire de roues conductrices (25 ; 125) qui roulent sur une première voie et une paire de roues porteuses (26 ; 126) qui roulent sur une seconde voie, le procédé comprenant les étapes de :

- journalisation d'un historique de la première voie qui implique le stockage d'un journal de la trajectoire des roues conductrices (25 ; 125) ;
- génération d'un signal de direction pour les roues porteuses (26 ; 126) sur la base de l'historique journalisé et un décalage spatial (d) entre les roues conductrices et porteuses ; et,
- commande de la direction des roues porteuses sur la base du signal de direction généré, **caractérisé en ce que** l'étape de journalisation de l'historique implique également le stockage d'un journal de la distance de trajet calculée.

2. Procédé selon la revendication 2, comprenant en outre le fait de déceler un changement angulaire entre la trajectoire des roues conductrices et une trajectoire des roues porteuses, et la détection d'une vitesse au sol, dans lequel le signal de direction est également basé sur le changement angulaire et la vitesse au sol détectée.

3. Procédé selon les revendications 1 ou 2, dans lequel le journal est stocké dans un tableau indexé d'événements séquentiels, le procédé comprenant en outre l'étape de :

- détermination d'un index actuel correspondant à un journal le plus récent ;
- détermination d'un index relatif en appliquant le décalage spatial à l'index actuel, dans lequel le journal correspondant à l'index relatif est utilisé pour calculer le signal de direction.

4. Procédé selon l'une quelconque des revendications 1 à 3, comprenant en outre la génération d'un point de consigne de direction à partir de l'historique journalisé, et la génération du signal de direction à partir du point de consigne de direction.

5. Système de commande de direction (100) pour une machine d'application de matière agricole à roues (10 ; 110), le système comprenant une paire de roues conductrices (25 ; 125) qui roulent sur une première voie, une paire de roues porteuses (26 ; 126) qui roulent sur une seconde voie, un moyen de direction configuré pour diriger les roues porteuses, et un moyen de commande (40) configuré pour générer un signal de direction pour commander le moyen de direction (38), dans lequel le moyen de commande (40) est également configuré pour journaliser un historique de la première voie qui implique le stockage d'un journal de la trajectoire des roues conductrices (25 ; 125) et pour générer le signal de direction sur la base de l'historique journalisé et un paramètre de décalage spatial qui est représentatif d'une distance de séparation (d) entre les paires de roues conductrices et porteuses, **caractérisé en ce que** le moyen de commande est configuré pour stocker un journal d'une distance de trajet calculée.

6. Système selon la revendication 5, comprenant en outre un moyen pour déceler un changement angulaire entre une trajectoire des roues conductrices et une trajectoire des roues porteuses, dans lequel le signal de direction généré est basé sur le changement angulaire.

7. Combinaison d'un tracteur agricole (12) et d'une machine d'application remorquée (10) comprenant un système de commande de direction selon la revendication 5 ou 6, dans laquelle le tracteur agricole comporte les roues conductrices (25), et la machine d'application remorquée (10) est accouplée au tracteur (12) par un attelage de remorquage (15) et comprend les roues porteuses (26).

8. Combinaison selon la revendication 7, comprenant en outre un dispositif de détection angulaire (45) configuré pour mesurer un déplacement angulaire d'un accouplement pivotant entre le tracteur (12) et la machine d'application (10) au niveau de l'attelage de remorquage (15), dans laquelle le calcul est basé sur le déplacement angulaire mesuré.

9. Machine d'application automotrice (110) comprenant un système de commande de direction selon la revendication 5 ou 6, la machine (110) comportant les roues conductrices et porteuses (125, 126) supportées sur un châssis commun.

Fig. 1

Fig. 2

_Fig. 3_

_Fig. 4_

*Fig. 5*

_Fig. 6_

_Fig.7_

*Fig. 8*

_Fig. 9_

## Fig. 10

```
┌────────────────────┐        ┌────────────────────┐
│   Centre control   │        │   Centre control   │
│  button pressed    │        │  button activated  │
│                    │        │   by software      │
└────────────────────┘        └────────────────────┘
          │                             │
          ▼                             │
┌────────────────────┐                  │
│  Disable all other │◄─────────────────┘
│  control functions │
└────────────────────┘
          │
          ▼
┌────────────────────┐
│   Wheel angle      │
│   setpoint = 0     │
└────────────────────┘
          │
          ▼
┌────────────────────┐
│ Valve control active│
│  (wheels move to   │
│  centre position)  │
└────────────────────┘
          │
          ▼
       ◇ Wheel angle ◇──── Yes
  No ◇    zero?    ◇
          │ No
          ▼
       ◇ Centre control ◇
  ◇   button          ◇
  ◇ released after    ◇──── Yes
  ◇ being pressed?    ◇
          │
          ▼
   ┌──────────────┐
   │ System inactive │
   └──────────────┘
```

## Fig. 11

```
        ┌──────────────────────┐
   ┌───►│  Calculate time step │
   │    └──────────────────────┘
   │              │
   │              ▼
   │    ┌──────────────────────┐
   │    │ Read and filter signals│
   │    └──────────────────────┘
   │              │
   │              ▼
   │    ┌──────────────────────┐
   │    │  Calculate system    │
   │    │    variables         │
   │    └──────────────────────┘
   │              │
   │              ▼
   │    ┌──────────────────────┐
   │    │    Update logs       │
   │    └──────────────────────┘
   │              │
   │              ▼
   │    ┌──────────────────────┐
   │    │ Calculate trailer wheel│
   │    │   angle setpoint     │
   │    └──────────────────────┘
   │              │
   │              ▼
   │    ┌──────────────────────┐
   │    │    Valve control     │
   │    └──────────────────────┘
   │              │
   └──────────────┘
```

## Fig. 12

| Sensors | 1st order | 2nd order | Control algorithm |
|---|---|---|---|
| Angle tractor-trailer | Angular velocity tractor | Relative heading tractor | Controller state |
| Angle wheel-trailer | Angular velocity trailer | Relative heading trailer | Trailer wheel setpoint |
| Speed tractor | Speed trailer | Distance travelled tractor | |
| Time | Time step | Distance travelled trailer | |

LOG

_Fig. 13b_

_Fig. 13a_

20

_Fig. 14_

Distance travelled log & current index number

Set Relative index number = Current index number +1

Read Tractor GNSS position @ Relative index number

Tractor travelled distance @Relative index > Trailer travelled distance

Yes

No

Setpoint trailing GNSS receiver = Logged tractor GNSS position @ Relative index number

Increase Relative index number

Relative index number > Max measurements?

No

Yes

Subtract Max measurements from Relative index number

*Fig. 15*

Automatic trail following activated

Disable all other control functions

Setpoint GNSS position differs from actual GNSS position?

No

No steering action

Yes

Actual position left from setpoint?

No

Steer command left

Yes

Steer command right

Valve control active

No

Automatic trail following de-activated

Yes

System inactive

*Fig. 16*

**EP 3 127 782 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2679470 A

- US 20030167107 A